# EUROPEAN PATENT APPLICATION

(11) **EP 2 407 753 A1**
(43) Date of publication of application: **18.01.2012**
(21) Application number: 10750551.3
(22) Date of filing: 08.03.2010
(51) Int. Cl.: G01C 21/00, G06F 17/30, G08G 1/137, G09B 29/00, G09B 29/10, H04L 9/08

(54) **CAR NAVIGATION SYSTEM AND INDIVIDUAL FUNCTIONAL DEVICE**

(30) Priority: 09.03.2009 JP 2009055164
(71) Applicant: Kabushiki Kaisha Toshiba, Minato-ku Tokyo 105-8001 (JP); Toshiba Solutions Corporation, Tokyo 105-8001 (JP)
(72) Inventor: INABA, Hitoshi, Minato-ku, Tokyo (JP); NOZAWA, Yukiteru, Minato-ku, Tokyo (JP)
(74) Representative: Siegert, Georg
(86) International application number: PCT/JP2010/001625
(87) International publication number: WO 2010/103794

(57) **Abstract**

A car navigation system includes: an in-vehicle display device that includes: a central information display device that has a display and displays a video image on the display; an individual functional device that is formed independently of the central information display device and has a navigation function; and an expansion device that connects the central information display device and the individual functional device; and a map division distribution system that includes a map encrypting unit that encrypts a divided map with a map key uniquely assigned to the divided map formed by dividing a map; a decryption key generating unit that decrypts the map key with a user key uniquely assigned to a user; and a decryption key distributing unit that distributes the decryption key to the individual functional device.

## Description

### TECHNICAL FIELD

The present invention relates to a car navigation system mounted on an automobile or the like, and more particularly, to a car navigation system that distributes map information to a map information storage device that is independently formed and can be attached to and detached from a display device mounted in the console of an automobile.

### BACKGROUND ART

In a conventional car navigation system, a number of devices such as a television device and a compact disk player are integrally formed. As a result, car navigations have been expensive (see Fig. 1 of Patent Document 1, for example).

Further, each user needs to purchase map information that contains a map of the whole country, and ends up purchasing maps of areas he/she does not need. Therefore, the price of the map information has been rather high.

To counter this problem, a map distribution system has been suggested. In the map distribution system, a USB interface and a SD card interface are attached to a car navigation system. Encrypted map information downloaded through a personal computer and a decryption key encrypted with a user key are stored in a USB memory, and the user key is stored in a SD card. The USB memory and the SD card are mounted on the car navigation system. The decryption key in the USB memory is decrypted with the user key stored in the SD card, and the map information is decrypted with the decrypted decryption key (see Patent Document 2, for example).

In this system, however, the map information needs to be transferred from the USB memory to the car navigation system. This is not only troublesome but also leads a problem: if the user loses the SD card, the purchased map information cannot be installed in the car navigation system.

### CITATION LIST

### PATENT LITERATURE

PLT 1: Japanese Patent Application Laid-Open No. 2008-143520
PLT 2: Japanese Patent Application Laid-Open No. 2008-076910

### SUMMARY OF THE INVENTION

### TECHNICAL PROBLEM

The object of the present invention is to provide a car navigation system and an individual functional device that can supply only the map of a region required by a user, to the user who needs the car navigation system.

### SOLUTION TO PROBLEM

The present invention provides a car navigation system that includes: an in-vehicle display device that includes a central information display device that has a display and displays a video image on the display; an individual functional device that is formed independently of the central information display device and has a navigation function; and an expansion device that connects the central information display device and the individual functional device; and a map division distribution system that includes a map encrypting unit that encrypts a divided map with a map key uniquely assigned to the divided map formed by dividing a map; a decryption key generating unit that decrypts the map key with a user key uniquely assigned to a user; and a decryption key distributing unit that distributes a decryption key to the individual functional device.

### ADVANTAGEOUS EFFECTS OF INVENTION

A user can purchase only a necessary map when necessary. A user can purchase the map containing a necessary route when necessary, without an instruction about the specific directions on the route. A user can purchase the map containing a necessary route when necessary, without a check on the map data the user has already purchased.

Also, a user does not need to download map information every time he/she purchases map information, and a user does not need to perform an operation to set map information.

Further, there is no need to perform a complicated operation to install an updated map from a CD-ROM.

### BRIEF DESCRIPTION OF THE DRAWINGS

Fig. 1 is a schematic view showing the structure of a map division distribution system according to a first embodiment;
Fig. 2 is a schematic view showing the structure of an in-vehicle display device of a first application example of the first embodiment;
Fig. 3 is a block diagram showing an example of an individual functional device for expanding the navigation function of the central information display device according to the first embodiment;
Fig. 4 is a block diagram showing the structure of an integrated individual functional device for expanding the navigation function according to the first embodiment;
Fig. 5 is a flowchart showing an operation of the central information display device according to the first embodiment;
Fig. 6 is a schematic view showing the structure of an in-vehicle display device of a second application example of the first embodiment;
Fig. 7 is a schematic view showing the structure of an in-vehicle display device of a third application example of the first embodiment;
Fig. 8 is a block diagram showing an example of an individual functional device for expanding the navigation function of the central information display device according to the first embodiment;
Fig. 9 is a block diagram showing the structure of an integrated individual functional device for expanding the navigation function according to the first embodiment;
Fig. 10 is a diagram showing an example in which the expansion device is placed at an upper portion of the central information display device according to the first embodiment;
Fig. 11 is a flowchart showing an area designated map data generating operation according to the first embodiment;
Fig. 12 is a flowchart showing a zone designated map data generating operation according to the first embodiment;
Fig. 13 is a flowchart showing an automatic map data generating operation according to the first embodiment;
Fig. 14 is a schematic view showing the structure of a map division distribution system according to a second embodiment;
Fig. 15 is a diagram showing a video information notifying indication that is displayed on a LCD according to the second embodiment; and
Fig. 16 is a flowchart showing an operation to display the video information notifying indication in the car navigation system according to the second embodiment.

### DESCRIPTION OF EMBODIMENT

The following is a detailed description of an embodiment of a car navigation system according to the present invention, with reference to the drawings. The car navigation system of the present invention includes a map division distribution system and an in-vehicle display device. The in-vehicle display device is set in vehicles such as automobiles, buses, and motorcycles. The in-vehicle display device of the present invention may be incorporated beforehand into the front panel of an automobile or the like, or may be formed independently of a front panel and be then set in an automobile or the like. The car navigation system will be described in detail in the following.

### (First Embodiment)

### (Structure of Map Division Distribution System)

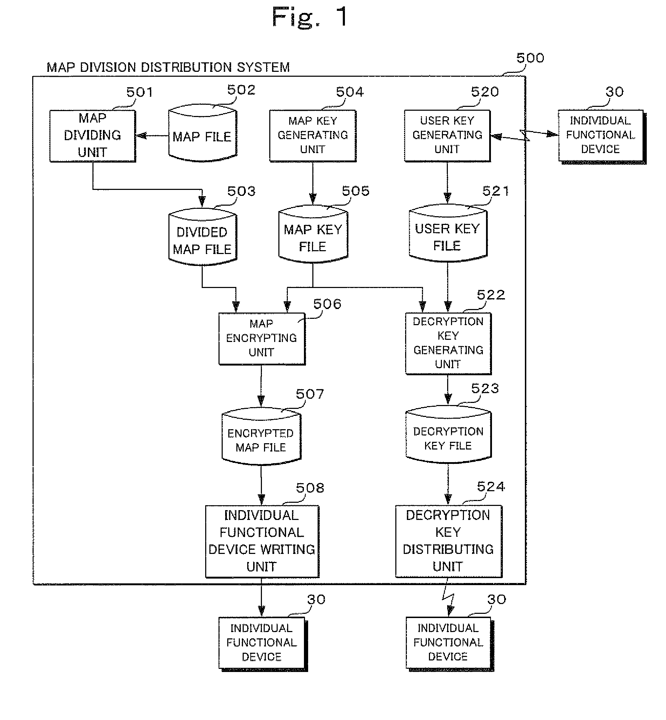

Fig. 1 is a schematic view showing the structure of a map division distribution system 500. As shown in Fig. 1, the map division distribution system 500 includes the respective modules of a map dividing unit 501, a map key generating unit 504, a map encrypting unit 506, an individual functional device writing unit 508, a user key generating unit 520, a decryption key generating unit 522, and a decryption key distributing unit 524, and the respective files of a map file 502, a divided map file 503, a map key file 505, an encrypted map file 507, a user key file 521, and a decryption key file 523. The map division distribution system 500 may include only one server, or may include respective servers for the map dividing unit 501, the map key generating unit 504, the map encrypting unit 506, the individual functional device writing unit 508, the user key generating unit 520, the decryption key generating unit 522, and the decryption key distributing unit 524.

The map division distribution system 500 divides national map data into predetermined units, encrypts each of the divided maps, and writes the encrypted maps into the later described individual functional device 30.

The map file 502 stores the national map data. The map dividing unit 501 reads the map data in predetermined division units such as prefectures or 10 km squares, assigns unique numbers to the divided map data, and writes the divided map data into the divided map file 503. The map data divided here is called the divided maps.

The map key generating unit 504 generates map keys that are encryption keys unique to the respective divided maps, and stores the map keys into the map key file 505.

The map encrypting unit 506 generates encrypted maps encrypted with the map keys associated with the respective divided maps, and stores the encrypted maps into the encrypted map file 507.

The individual functional device writing unit 508 writes all the encrypted maps into the later described individual functional device 30.

The map division distribution system 500 distributes the keys for decrypting the encrypted maps to the individual functional device 30, in response to requests from the later described individual functional device 30.

The individual functional device 30 transmits an ID unique to a user or the individual functional device, to the user key generating unit 520. The user key generating unit 520 generates a user key for encrypting a map key from the ID, transmits the user key to the individual functional device 30, and stores the user key into the user key file 521.

The decryption key generating unit 522 reads, from the map key file 505, the map key corresponding to a divided map individually designated by the individual functional device 30, generates a decryption key encrypted with the user key read from the user key file 521, and stores the decryption key into the decryption key file 523. The decryption key distributing unit 524 distributes the decryption key to the individual functional device 30.

The individual functional device 30 decrypts the received decryption key with the user key. Through this decryption, the map key is obtained. The individual functional device 30 further decrypts the encrypted map file with this map key. In this manner, the user obtains the desired map data.

### (Structure of the In-Vehicle Display Device)

### (First Application)

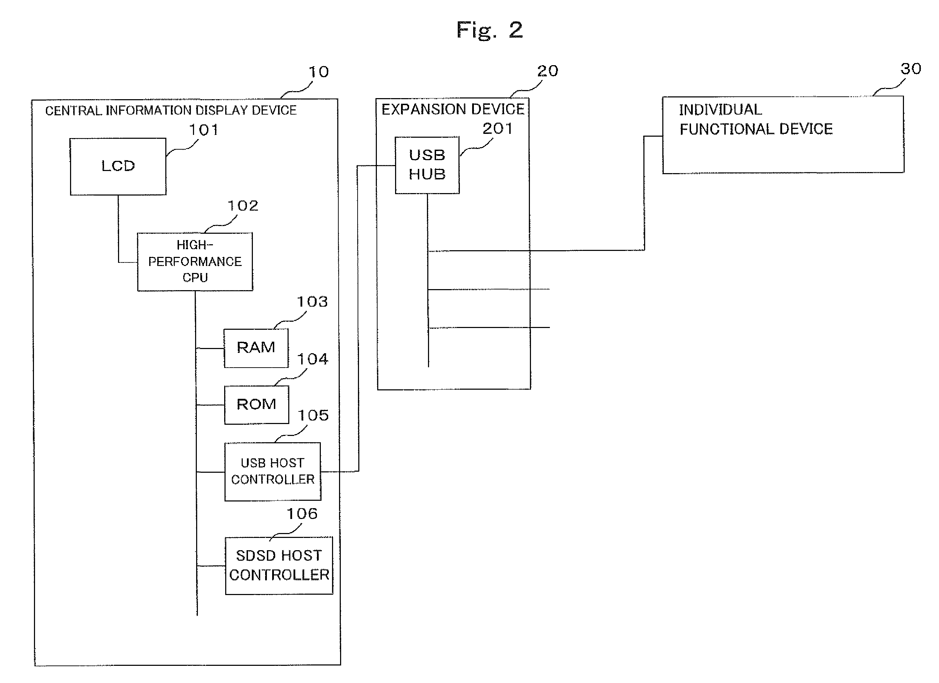

Fig. 2 is a schematic view showing the structure of a first application example of the in-vehicle display device of the present invention. As shown in Fig. 2, the in-vehicle display device in this application example includes a central information display device 10, an expansion device 20, and the individual functional device 30.

The central information display device 10 may be incorporated beforehand into the front panel of an automobile or the like, or may be formed independently of the front panel and be then set in an automobile or the like. The central information display device 10 includes a LCD (Liquid Crystal Display) 101, a high-performance CPU 102, a RAM 103 and a ROM 104 that are storage devices, a USB host controller 105 that controls a USB (Universal Serial Bus) as a general-purpose serial communication bus, and a SDSD host controller 106 that controls a copyright protectable SD card memory.

The LCD 101 receives a VGA signal from the high-performance CPU 102, and displays a video image on a display screen. A touch panel is provided on the LCD 101, and an input from this touch panel is input to the high-performance CPU 102.

The high-performance CPU 102 has such capabilities as to execute various applications of the later described individual functional device 30. A SDRAM (synchronous DRAM) can be used as the RAM 103. A flash ROM can be used as the ROM 104. The USB host controller 105 may be a controller for a general-purpose serial communication bus other than a USB.

The expansion device 20 includes a USB HUB 201. This USB HUB 201 is connected to the USB host controller 105 of the central information display device 10. The expansion device 20 may be integrally formed with, or may be formed independently of the central information display device 10. The USB HUB 201 includes a plurality of HUB port.

The individual functional device 30 is formed independently of the central information display device 10 and the expansion device 20. The individual functional device 30 can be attached to and detached from the expansion device 20. The individual functional device 30 and the expansion device 20 are connected to each other by a general-purpose serial communication bus such as a USB. The shape of the jack that connects the individual functional device 30 and the expansion device may differ from the shape of the jack of a general-purpose serial communication bus such as a conventional USB.

The individual functional device 30 is connected to the expansion device 20, and operates in cooperation with the central information display device 10, to expand the function of the central information display device 10. The individual functional device 30 includes a device controller for general-purpose serial communication buses, such as a USB device controller 301A, as described later.

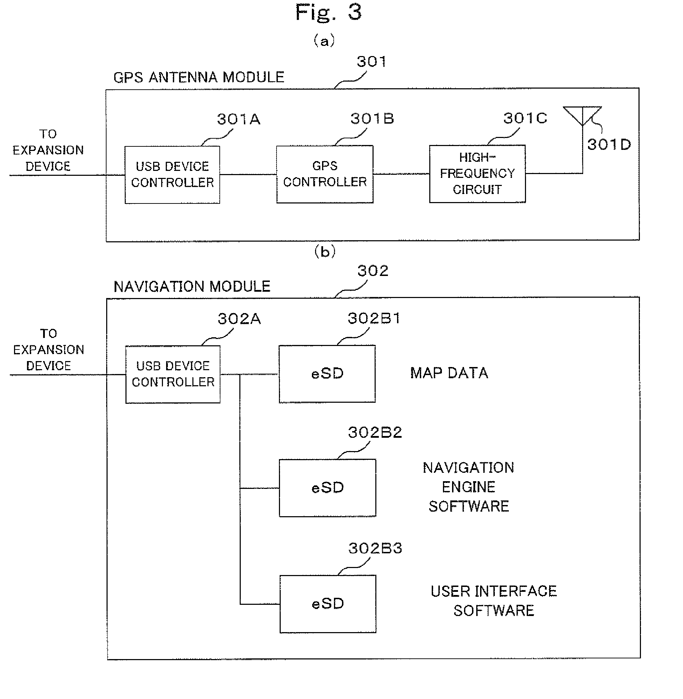

Fig. 3 is a block diagram showing an example of the individual functional device 30 for expanding the navigation function of the central information display device 10. As shown in Fig. 3, the individual functional device for expanding the navigation function includes a GPS antenna module 301 shown in Fig. 3 (a) and a navigation module 302 shown in Fig. 3(b).

The GPS antenna module 301 includes: an antenna 301D that receives signals; a high-frequency circuit 301C that is connected to the antenna 301D and processes the received signals; a GPS controller 301B that generates positional information from the signals processed by the high-frequency circuit 301C; and a USB device controller 301A that controls the operation of the GPS controller 301B and is connected to the USB HUB 201 of the expansion device 20.

The navigation module 302 includes: an eSD 302B1 as a storage device that stores map data that is the data related to maps; an eSD 302B2 as a storage device that stores navigation engine software that is the software for performing navigation; and an eSD 302B3 as a storage device that stores user interface software functioning as an interface between a user and the individual functional device for expanding the navigation function.

Here, an eSD (embedded Secure Digital Memory) is described. An eSD is a NAND flash memory that has a confidential area. This eSD can store encrypted data that requires copyright protection such as music data, map data, and paid application data as needed, and also can store an encryption key for the data. Where necessary, the eSD can also store unencrypted data.

Although more than one eSD is shown in Fig. 3(b), the navigation module 302 may designed to include only one eSD, and to store the map data, the navigation engine software, and the user interface software.

The navigation module 302 further, and includes a USB device controller 302A that controls those eSDs and is connected to the USB HUB 201 of the expansion device 20.

In this individual functional device for expanding the navigation function, the GPS antenna module 301 and the navigation module 302 are formed independently of each other. Accordingly, the size of each module can be effectively made smaller.

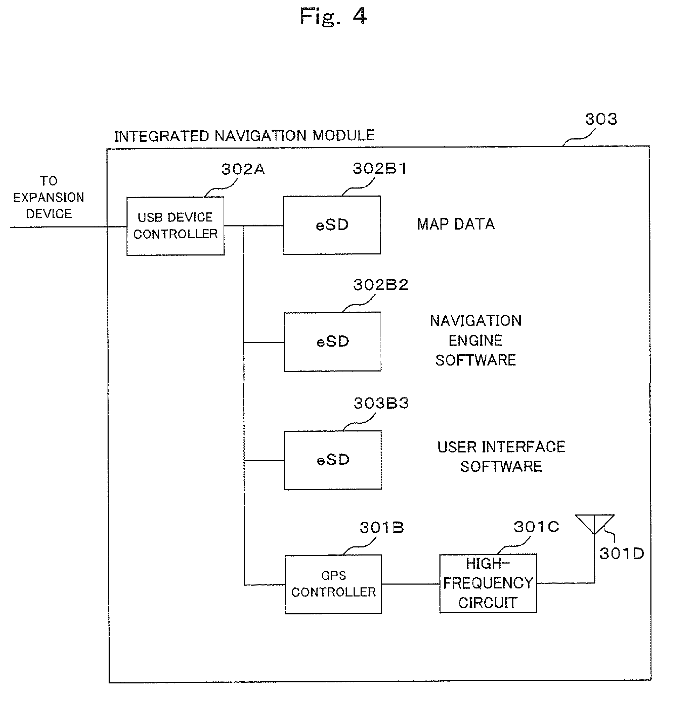

Fig. 4 is a block diagram showing the structure of an integrated navigation module 303 that is an integrated individual functional device for expanding the navigation function. As shown in Fig. 4, the integrated navigation module 303 that is a navigation module including a GPS antenna module includes an eSD 302B1, an eSD 302B2, an eSD 303B3 that stores user interface software, a GPS controller 301B, a high-frequency circuit 301C, and an antenna 301D.

The integrated navigation module 303 further includes a USB device controller 302A that is connected to and controls the eSD 302B1, the eSD 302B2, the eSD 303B3, and the GPS controller 301B. The USB device controller 302A is also connected to the USB HUB 201 of the expansion device 20.

In this integrated navigation module 303, the GPS antenna module and the navigation module are integrally formed. Accordingly, this integrated navigation module 303 has the advantage that installation and removal are simple and easy.

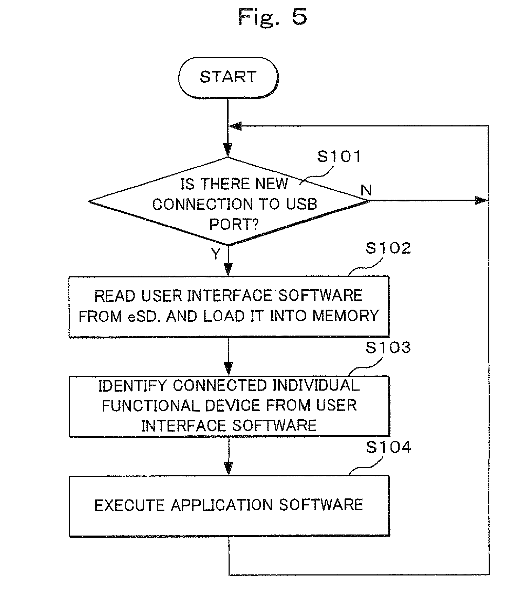

Fig. 5 is a flowchart showing the operation of the central information display device 10. As shown in Fig. 5, in step S101, the central information display device 10 determines whether there is a new connection to the USB port. If the central information display device 10 recognizes a new connection, the central information display device 10 moves on to step S102. If the central information display device 10 does not recognize a new connection, the central information display device 10 returns to step S101.

In step S102, the central information display device 10 reads the user interface software from an eSD of the individual functional device 30, and loads the user interface software into a memory such as the RAM 103 of the central information display device 10.

In step S103, the central information display device 10 recognizes the connected individual functional device from the loaded user interface software.

In step S104, the central information display device 10 reads and executes application software from an eSD of the individual functional device 30, and returns to step S101.

In the following, the operation for each individual functional device 30 is described. In a case where an individual functional device for expanding the navigation function is connected to the expansion device 20, the central information display device 10 follows the above described flow of Fig. 5, to identify the individual functional device, and read and execute the navigation engine software that is application software.

The central information display device 10 reads the positional information from the GPS antenna module 301, reads the map data from the eSD 302B1, and stores the positional information and the map data into a memory. The central information display device 10 executes the navigation engine software, and reads the positional information and the map data stored in the memory, according to navigation engine software instructions. In this manner, the central information display device 10 realizes the navigation function.

The integrated navigation module 303 also operates, following the operation flow of the central information display device 10 shown in Fig. 5.

Each individual functional device 30 can be designed to have a communication function. For example, a one-segment module that includes a one-segment tuner, a storage device that stores driver software, an arithmetic device, and communication devices such as an antenna and an amplifying device can be used as an individual functional device 30 having a communication function. Such an individual functional device 30 having a communication function communicates with the map division distribution system 500.

### (Second Application Example)

Next, a second application example of the in-vehicle display device of the present invention is described. In this application example, the structure and operation of the individual functional device 30 are the same as the structure and operation of the individual functional device 30 according to the first embodiment, and therefore explanation of them is not repeated herein.

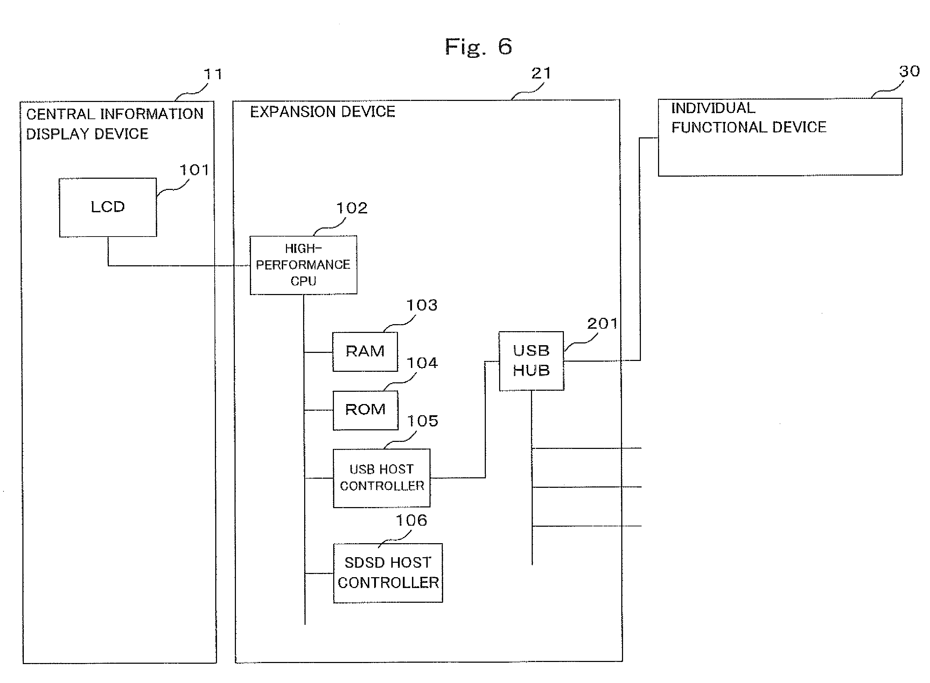

Fig. 6 is a schematic view showing the structure of the in-vehicle display device of this application example. As shown in Fig. 6, the in-vehicle display device of this application example includes a central information display device 11, an expansion device 21, and an individual functional device 30.

The central information display device 11 may be incorporated beforehand into the front panel of an automobile or the like, or may be formed independently of the front panel and be then set in an automobile or the like. The central information display device 11 includes a LCD 101. The LCD 101 receives a VGA signal from a high-performance CPU 102 of the expansion device 21, and displays a video image on a display screen. A touch panel is provided on the LCD 101, and an input from this touch panel is input to the high-performance CPU 102 of the expansion device 21.

The expansion device 21 includes the high-performance CPU 102, a RAM 103 and a RAM 104 that are storage devices, a USB host controller 105 that controls a USB (Universal Serial Bus) as a general-purpose serial communication bus, a SDSD host controller 106 that controls a copyright protectable SD card memory, and a USB HUB 201.

The high-performance CPU 102 has such capabilities as to execute various applications of the individual functional device 30. A SDRAM can be used as the RAM 103. A flash ROM can be used as the ROM 104. The USB host controller 105 may be a controller for a general-purpose serial communication bus other than a USB. The USB HUB 201 is connected to the USB host controller 105. The USB HUB 201 includes a plurality of HUB port. The expansion device 21 may be integrally formed with, or may be formed independently of the central information display device 11.

The operation of the expansion device 21 of this application example is the same as the operation of the central information display device 10 of the first application example.

### (Third Application Example)

Next, a third application example of the in-vehicle display device of the present invention is described. In this application example, the structure and operation of the central information display device 11 are the same as the structure and operation of the central information display device 11 of the second application example, and therefore, explanation of them is not repeated herein.

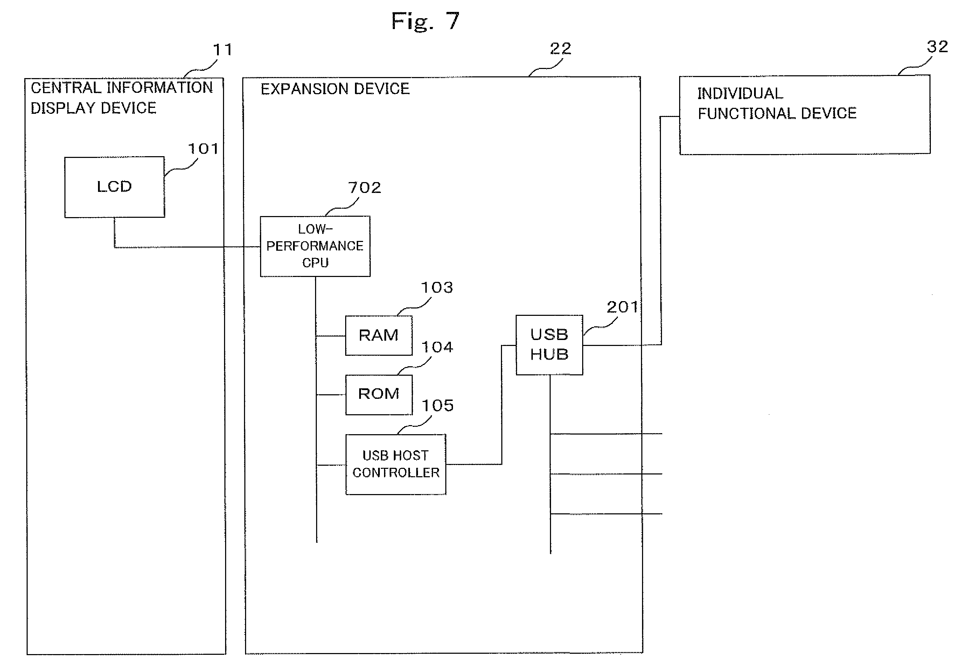

Fig. 7 is a schematic view showing the structure of the in-vehicle display device of this application example. As shown in Fig. 7, the in-vehicle display device of this application example includes the central information display device 11, an expansion device 22, and an individual functional device 32.

The expansion device 22 includes the low-performance CPU 702, a RAM 103 and a RAM 104 that are storage devices, a USB host controller 105 that controls a USB as a general-purpose serial communication bus, and a USB HUB 201.

The low-performance CPU 702 has such limited capabilities as to output signals output from the individual functional device 32, to the central information display device 11, output signals input from the central information display device 11, to the individual functional device 32, and control the respective components included in the expansion device 22.

A SDRAM can be used as the RAM 103. A flash ROM can be used as the ROM 104. The USB host controller 105 may be a controller for a general-purpose serial communication bus other than a USB. The USB HUB 201 is connected to the USB host controller 105. The USB HUB 201 includes a plurality of HUB port. The expansion device 22 may be integrally formed with, or may be formed independently of the central information display device 11.

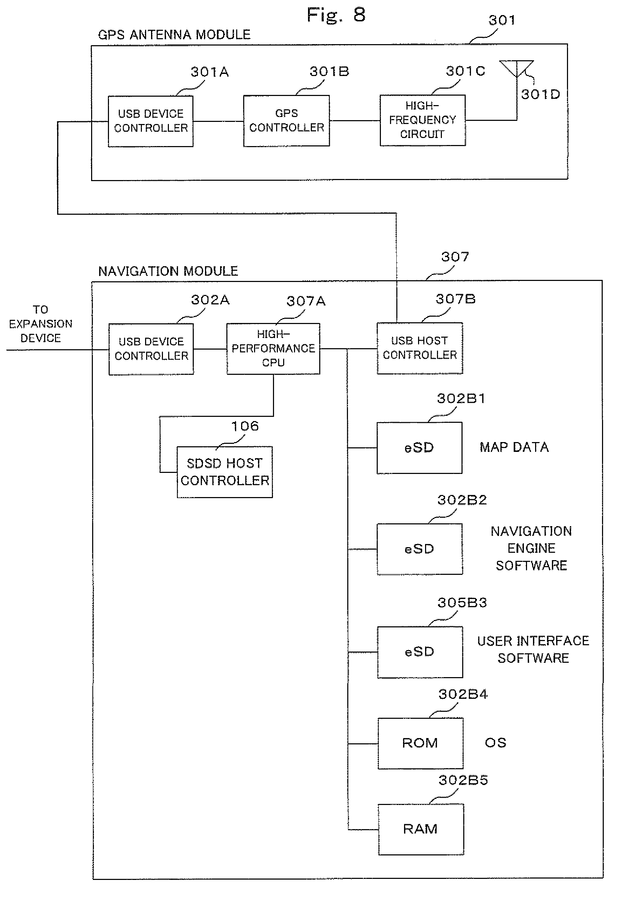

Fig. 8 is a block diagram showing an example of the individual functional device 32 for expanding the navigation function of the central information display device 11. As shown in Fig. 8, the individual functional device for expanding the navigation function includes a GPS antenna module 301 and a navigation module 307.

The GPS antenna module 301 includes an antenna 301D that receives signals; a high-frequency circuit 301C connected to the antenna 301D and processes the received signals; a GPS controller 301B that generates positional information from the signals processed by the high-frequency circuit 301C; and a USB device controller 301A that controls the operation of the GPS controller 301B, and is connected to the later described USB host controller 307B of the navigation module 307.

The navigation module 307 includes: a high-performance CPU 307A that has such capabilities as enough to execute application software; a SDSD host controller 106 that is connected to the high-performance CPU 307A, and controls a copyright protectable SD card memory; and the USB host controller 307B that controls a USB that is a general-purpose serial communication bus.

The navigation module 307 further includes: an eSD 302B1 as a storage device that stores map data that is the data related to maps; an eSD 302B2 as a storage device that stores navigation engine software that is the application software for performing navigation; an eSD 305B3 as a storage device that stores user interface software functioning as an interface between a user and the individual functional device for expanding the navigation function; a ROM 302B4 as a storage device that stores the OS (Operating System); and a RAM 302B5 that is a storage device.

Although more than one eSD is shown in Fig. 8, the navigation module 307 may include only one eSD, and the one eSD may store the map data, the navigation engine software, and the user interface software.

The navigation module 307 further includes a USB device controller 302A that controls the respective components included in the navigation module 307 and is connected to the USB HUB 201 of the expansion device 22.

In the individual functional device for expanding the navigation function, the GPS antenna module 301 and the navigation module 307 are formed independently of each other. Accordingly, the size of each module can be effectively made smaller.

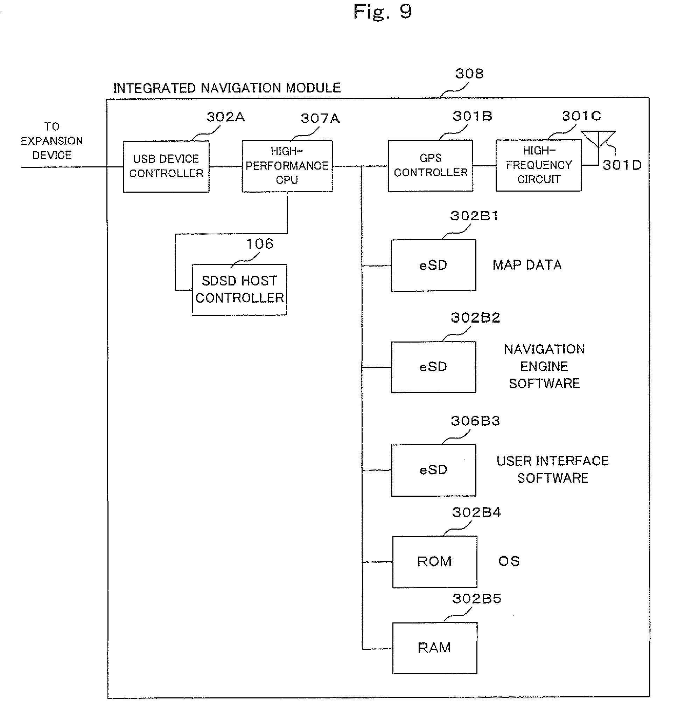

Fig. 9 is a block diagram showing the structure of an integrated navigation module 308 that is an integrated individual functional device for expanding the navigation function. As shown in Fig. 9, the integrated navigation module 308 that is a navigation module including a GPS antenna module includes: a high-performance CPU 307A that has such capabilities as to execute application software; and a SDSD host controller 106 that is connected to the high-performance CPU 307A, and controls a copyright protectable SD card memory.

The integrated navigation module 308 further includes: an antenna 301D; a high-frequency circuit 301C connected to the antenna 301D and processes received signals; and a GPS controller 301B that generates positional information from the signals processed by the high-frequency circuit 301C.

The integrated navigation module 308 further includes: an eSD 302B1 as a storage device that stores map data that is the data related to maps; an eSD 302B2 as a storage device that stores navigation engine software that is the application software for performing navigation; an eSD 306B3 as a storage device that stores user interface software functioning as an interface between a user and the individual functional device for expanding the navigation function; a ROM 302B4 as a storage device that stores the OS; and a RAM 302B5 that is a storage device.

Although more than one eSD is shown in Fig. 9, the integrated navigation module 308 may include only one eSD, and the one eSD may store the map data, the navigation engine software, and the user interface software.

The integrated navigation module 308 further includes a USB device controller 302A that controls the respective components included in the integrated navigation module 308 and is connected to the USB HUB 201 of the expansion device 22.

Next, an example of installation of an in-vehicle display device of this embodiment in an automobile is described.

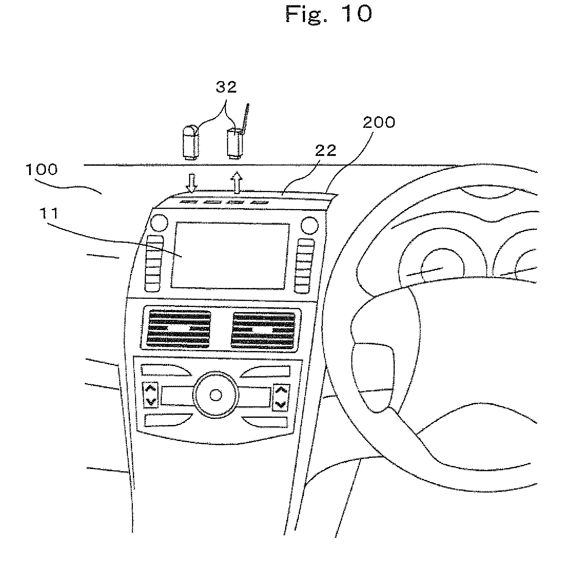

Fig. 10 is a diagram showing an example of a layout in which the expansion device 22 is placed at an upper portion of the central information display device 11. As shown in Fig. 10, the central information display device 11 is placed on the front face of a front panel 100.

The expansion device 22 is placed at an upper portion of the central information display device 11, or is placed above the LCD 101 and in such a position as to be housed in a console 200.

With such a layout, individual functional devices 32 can easily receive radio waves, and the console can be readily assembled.

### (Operations of the Car Navigation System)

### (Area Designated Map Data Generating Operation)

The car navigation system of this embodiment enables individual use of map data about an area designated by a user.

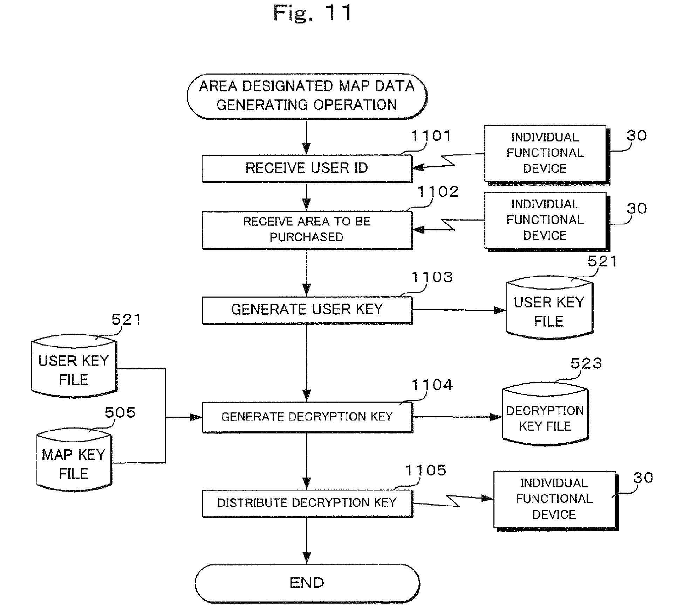

Fig. 11 is a flowchart showing an area designated map data generating operation that is a distributing operation to be performed when a user designates a necessary map area before purchase. As shown in Fig. 11, in step 1101, the map division distribution system 500 receives a user ID from an individual functional device 30. Here, the user ID may be an ID uniquely assigned to the individual functional device 30.

In step 1102, the map division distribution system 500 receives an area to be purchased from the individual functional device 30. The area to be purchased is input to the individual functional device 30 via a touch panel or the like of the central information display device 11.

In step 1103, the map division distribution system 500 generates a user key based on the user ID, and stores the user key into the user key file 521.

In step 1104, the map division distribution system 500 reads the map key of the designated divided map from the map key file 505, generates a decryption key formed by encrypting the map key with the user key, and stores the decryption key into the decryption key file 523.

In step 1105, the map division distribution system 500 reads the decryption key from the decryption key file 523, and distributes the decryption key to the individual functional device 30.

The individual functional device 30 decrypts the decryption key with the user key, to obtain the map key. The individual functional device 30 then decrypts the encrypted map with the map key, to obtain the map data.

As described above, in the car navigation system of this embodiment, an encrypted map is stored beforehand in the individual functional device 30 that is independent of the central information display device 10. The map key for decrypting the encrypted map is encrypted with a user key, and is then distributed to the individual functional device. Accordingly, a user can purchase only a necessary map when necessary.

### (Zone Designated Map Data Generating Operation)

The car navigation system of this embodiment enables individual use of data about a map from a starting point to a destination point designated by a user.

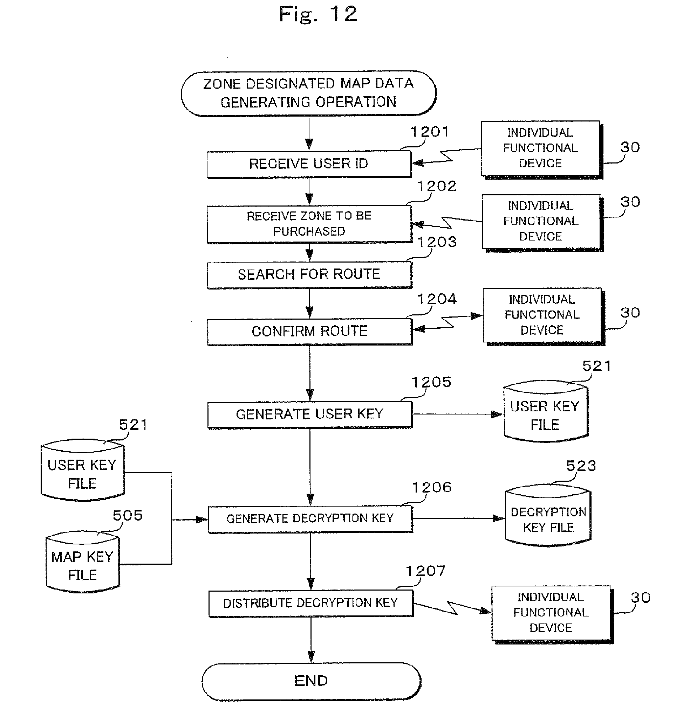

Fig. 12 is a flowchart showing a zone designated map data generating operation that is a distributing operation to be performed when a user designates a starting point and a destination point before purchase. As shown in Fig. 12, in step 1201, the map division distribution system 500 receives a user ID from the individual functional device 30. Here, the user ID may be an ID uniquely assigned to the individual functional device 30.

In step 1202, the map division distribution system 500 receives the starting point and the destination point that define the zone to be purchased from the individual functional device 30. The zone to be purchased is input to the individual functional device 30 via a touch panel or the like of the central information display device 11.

In step 1203, the map division distribution system 500 searches for a route. The route search can be performed by a known technique. Alternatively, the route search may be performed by the individual functional device 30.

In step 1204, the map division distribution system 500 communicates with the individual functional device 30, to confirm the route to be purchased.

In step 1205, the map division distribution system 500 generates a user key based on the user ID, and stores the user key into the user key file 521.

In step 1206, the map division distribution system 500 reads the map key of the divided map containing the designated route from the map key file 505. The map division distribution system 500 then generates a decryption key by encrypting the map key with the user key, and stores the decryption key into the decryption key file 523.

In step 1207, the map division distribution system 500 reads the decryption key from the decryption key file 523, and distributes the decryption key to the individual functional device 30.

The individual functional device 30 decrypts the decryption key with the user key, to obtain the map key. The individual functional device 30 then decrypts the encrypted map with the map key, to obtain the map data.

As described above, the car navigation system of this embodiment receives a starting point and a destination point, and performs a route search. Further, the map key of the divided map containing the designated route is distributed to the individual functional device 30. Accordingly, a user can purchase the map containing a necessary route when necessary, without an instruction about the specific directions on the route.

### (Automatic Map Data Generating Operation)

The car navigation system of this embodiment enables automatic individual use of the map data about the next area to be entered when a user enters an area not displayed on the purchased map while driving.

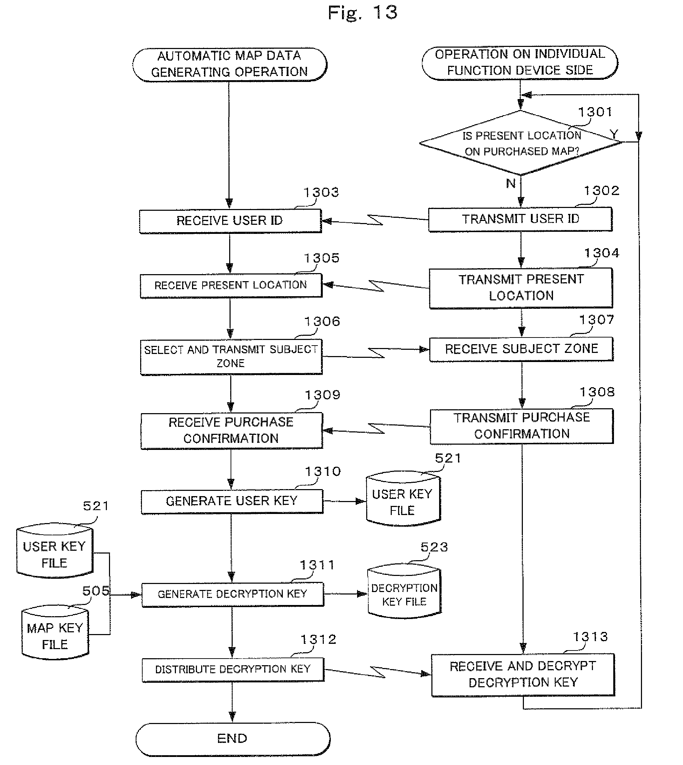

Fig. 13 is a flowchart showing an automatic map data generating operation that is a distributing operation to be performed when a user performs automatic search for map data before purchase while driving. As shown in Fig. 13, the individual functional device 30 determines whether the present location is in an area shown on a purchased map. If the present location is in an area shown on a purchased map, the individual functional device returns to step 1301. If not, the individual functional device moves on to step 1302.

In step 1302, the individual functional device 30 transmits a user ID to the map division distribution system 500. Here, the user ID may be an ID uniquely assigned to the individual functional device 30. In step 1303, the map division distribution system 500 receives the user ID.

In step 1304, the individual functional device 30 transmits the present location to the map division distribution system 500. In step 1305, the map division distribution system 500 receives the present location.

In step 1306, the map division distribution system 500 selects a subject zone as the map information to which the area to be next entered by the user belongs, and transmits the subject zone to the individual functional device 30. In step 1307, the individual functional device receives the subject zone.

Alternatively, step 1304 through step 1307 may be carried out in the following manner. In step 1304, the individual functional device 30 identifies the divided map containing the route to be next entered, based on the present location. In step 1305, the individual functional device 30 transmits the subject zone that is the identified divided map to the map division distribution system 500.

In step 1306, the map division distribution system 500 confirms that there is the divided map corresponding to the subject zone, and transmits the subject zone to the individual functional device 30. In step 1307, the individual functional device receives the subject zone.

In step 1308, when the user inputs a purchase confirmation, the individual functional device 30 transmits a purchase confirmation signal to the map division distribution system 500. In step 1309, the map division distribution system 500 receives the purchase confirmation signal.

In step 1310, the map division distribution system 500 generates a user key based on the user ID, and stores the user key into the user key file 521.

In step 1311, the map division distribution system 500 reads the map key of the divided map containing the designated route from the map key file 505. The map division distribution system 500 generates a decryption key by encrypting the map key with the user key, and stores the decryption key into the decryption key file 523.

In step 1312, the map division distribution system 500 reads the decryption key from the decryption key file 523, and distributes the decryption key to the individual functional device 30.

In step 1313, the individual functional device 30 decrypts the decryption key with the user key, to obtain the map key. The individual functional device 30 then decrypts the encrypted map with the map key, to obtain the map data.

As described above, the car navigation system of this embodiment automatically selects a subject zone to be purchased, when the user enters an area on a map the user has not purchased. Further, the car navigation system of this embodiment distributes the map key of the divided map of the subject zone to the individual functional device 30. Accordingly, the user can purchase the map containing a necessary route when necessary, without a check on the map data the user has already purchased.

### (Second Embodiment)

### (Structure of the Map Division Distribution System)

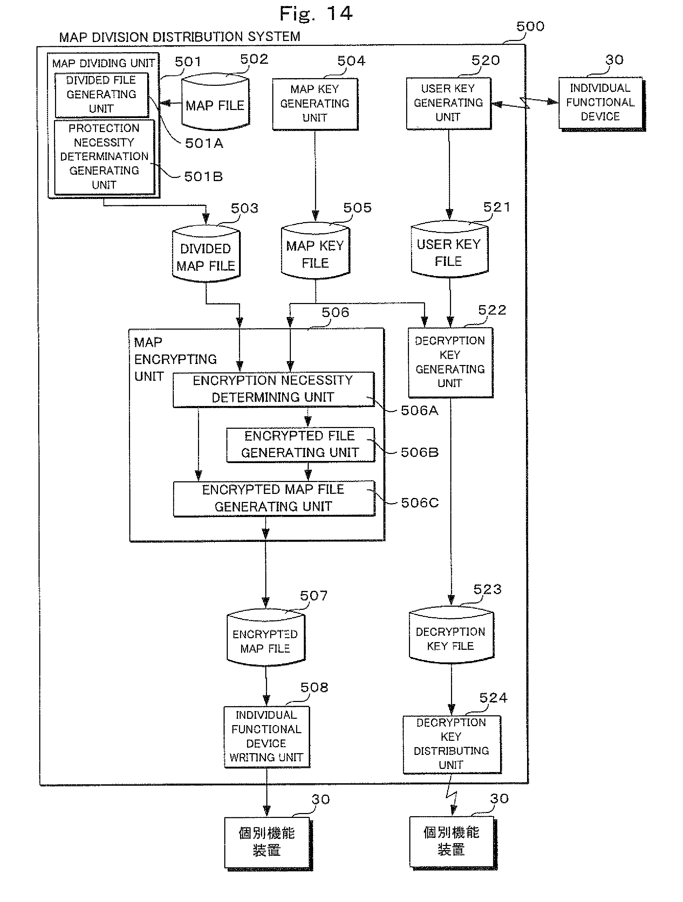

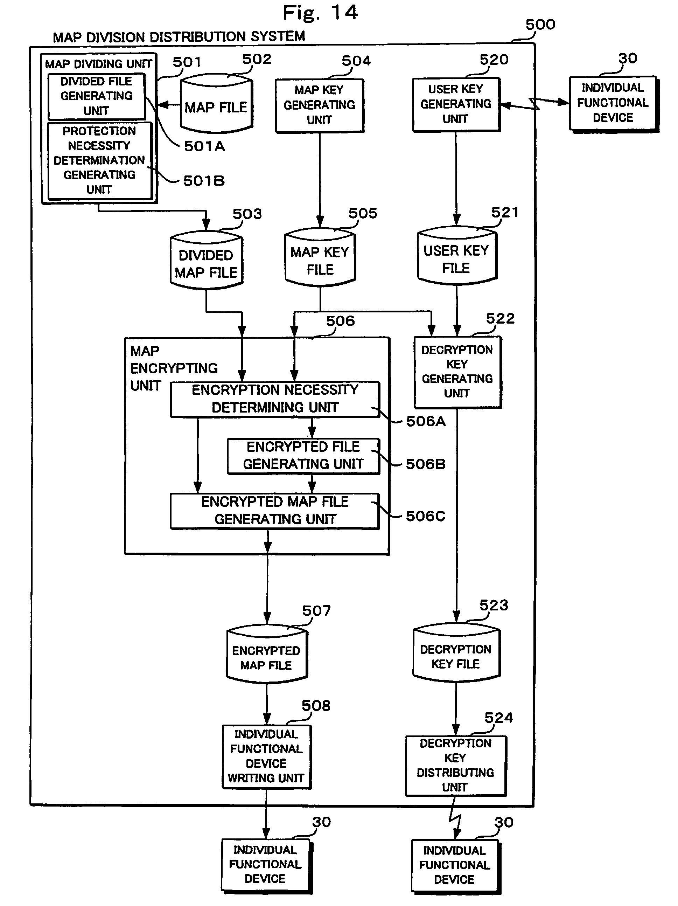

Fig. 14 is a schematic view showing the structure of a map division distribution system 500 of the second embodiment. As shown in Fig. 14, the map division distribution system 500 includes the respective modules of a map dividing unit 501, a map key generating unit 504, a map encrypting unit 506, an individual functional device writing unit 508, a user key generating unit 520, a decryption key generating unit 522, and a decryption key distributing unit 524, and the respective files of a map file 502, a divided map file 503, a map key file 505, an encrypted map file 507, a user key file 521, and a decryption key file 523. The map division distribution system 500 may include only one server, or may include respective servers for the map dividing unit 501, the map key generating unit 504, the map encrypting unit 506, the individual functional device writing unit 508, the user key generating unit 520, the decryption key generating unit 522, and the decryption key distributing unit 524.

The map division distribution system 500 divides national map data into predetermined units, encrypts each of the divided maps, and writes the encrypted maps into the individual functional device 30.

The map file 502 stores the national map data. The map data contains video data and the like. The video data is connected to spot information about the map by a pointer. In the map data, the video pointer pointing out the video data is stored at the location in which the video image is to be displayed.

Here, the video data and the like contain not only video data but also text data, audio data, and data of any other kinds.

Therefore, when the car navigation system reads map data to display a map, this pointer is also read in. Accordingly, a mark indicating that the video data and the like exist at the corresponding location on the map displayed on the display can be displayed, and the user can be notified by sound.

The map dividing unit 501 reads the map data in predetermined division units such as prefectures or 10 km squares, assigns unique numbers to the divided map data, and writes the divided map data into the divided map file 503. The map data divided here is called the divided maps.

The map dividing unit 501 includes a divided file generating unit 501A and a protection necessity determination generating unit 501B. The divided file generating unit 501A divides the map data into predetermined layers. For example, the minimum unit of the divided prefectural layers consists of several prefectures. The minimum unit of the divided city layers consists of several cities. The divided file generating unit 501A divides each map by layers of different levels.

In the upper-level layers, each divided map only holds outline contents such as arterial roads. In the lower-level layers, on the other hand, each divided map holds specific contents of practical levels. Therefore, the divided maps in the lower-level layers have additional values to be protected by encryption.

The protection necessity determination generating unit 501B determines whether to encrypt and protect each divided map formed by dividing a map. The protection necessity determination generating unit 501B can be designed to determine that layers of a certain level and higher do not require protection, and store information as to whether to need a specific divided map from an input/output terminal.

The protection necessity determination generating unit 501B turns on encryption necessity flags of the map data and the video data about divided maps that require protection by encryption, and stores the encryption necessity flags into the divided map file 503.

The map key generating unit 504 generates map keys that are encryption keys unique to the respective divided maps, and stores the map keys into the map key file 505.

The map encrypting unit 506 generates encrypted maps encrypted with the map keys associated with the respective divided maps, and stores the encrypted maps into the encrypted map file 507. The map encrypting unit 506 includes an encryption necessity determining unit 506A, an encrypted file generating unit 506B, and an encrypted map file generating unit 506C.

The encryption necessity determining unit 506A receives the divided maps, the video data, and the respective encryption necessity flags of the divided maps and the video data from the divided map file 503 and also receives the map keys associated with the respective divided maps from the map key file 505.

The encryption necessity determining unit 506A determines whether encryption is necessary for the respective divided maps and video data by reading the encryption necessity flags. The encryption necessity determining unit 506A transfers the divided maps and video data with encryption necessity flags that are on to the encrypted file generating unit 506B. The encryption necessity determining unit 506A also transfers the divided maps and video data with encryption necessity flags that are not on to the encrypted map file generating unit 506C.

The encrypted file generating unit 506B encrypts the divided maps and video data with the map keys, and transfers the encrypted divided maps and video data to the encrypted map file generating unit 506C.

The encrypted map file generating unit 506C stores the transferred data into the encrypted map file 507.

The individual functional device writing unit 508 writes all the encrypted maps into the later described individual functional device 30.

The map division distribution system 500 distributes the keys for decrypting the encrypted maps to the individual functional device 30, in response to requests from the later described individual functional device 30.

The individual functional device 30 transmits an ID unique to a user or the individual functional device, to the user key generating unit 520. The user key generating unit 520 generates a user key for encrypting a map key from the ID, transmits the user key to the individual functional device 30, and stores the user key into the user key file 521.

The decryption key generating unit 522 reads, from the map key file 505, the map key corresponding to a divided map individually designated by the individual functional device 30, generates a decryption key encrypted with the user key read from the user key file 521, and stores the decryption key into the decryption key file 523. The decryption key distributing unit 524 distributes the decryption key to the individual functional device 30.

The individual functional device 30 decrypts the received decryption key with the user key. Through this decryption, the map key is obtained. The individual functional device 30 further decrypts the encrypted map file with this map key. In this manner, the user obtains the desired map data.

### (Structure of the In-Vehicle Display Device)

The structure of the in-vehicle display device according to the second embodiment is the same as the structure of the in-vehicle display device according to the first embodiment.

### (Operations of the Car Navigation System)

The operations of the car navigation system according to the second embodiment are the same as the operations of the car navigation system according to the first embodiment, except for the following aspects.

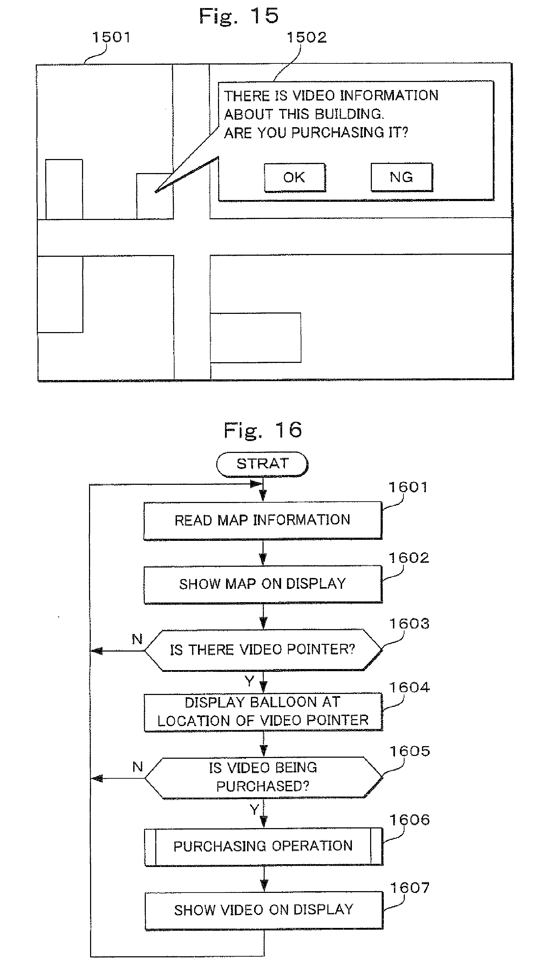

Fig. 15 is a diagram showing a video information notifying indication 1502 displayed on the LCD 101. As shown in Fig. 15, in a case where video information is included in the read map data to be displayed, or where a video pointer is included in the map data, the video information notifying indication 1502 notifying that there is video information is displayed at the corresponding location on the map displayed on the LCD 101.

The video information notifying indication 1502 displays an "OK" button to be pressed when a user agrees to a purchase and a "NG" button to be pressed when a user does not agree to a purchase, as well as text information such as "There is video information about this building. Are you purchasing it?". The video information notifying indication 1502 may be designed to also display a fee.

Fig. 16 is a flowchart showing an operation to display the video information notifying indication 1502 of the car navigation system. As shown in Fig. 16, in step 1601, the car navigation system reads map information. In step 1602, the car navigation system displays a map on a display or the LCD 101.

In step 1603, the car navigation system determines whether a video pointer is included in the map data about the displayed map. In a case where a video pointer is included, the car navigation system moves on to step 1604. In a case where a video pointer is not included, the car navigation system returns to step 1601.

In step 1604, the car navigation system displays the video information notifying indication 1502 in the form of a balloon at the location of the map data having the video pointer.

In step 1605, the car navigation system determines whether the "OK" button indicating a purchase has been pressed. In a case where the "OK" button has been pressed, the car navigation system moves on to step 1606. In a case where the "NG" button has been pressed, the car navigation system returns to step 1601.

In step 1606, the car navigation system performs a predetermined purchasing operation. In step 1607, the car navigation system displays the purchased video image on the LCD 101, and then returns to step 1601.

As described above, the car navigation system of this embodiment includes not only the same components as those of the car navigation system of the first embodiment, but also the map file 502 that stores video data associated with the locations of map data, the divided file generating unit 501A that divides the map data into layers of different levels, the protection necessity determination generating unit 501B that determines whether encryption is necessary for each divided map and stores the results, the encryption necessity determining unit 506A that reads stored encryption necessity information and determines whether encryption is necessary, the encrypted file generating unit 506B that performs encryption, and the encrypted map file generating unit 506C that stores data transferred from the encryption necessity determining unit 506A or the encrypted file generating unit 506B.

Accordingly, free services can be set for the maps in each of the layers of different levels, and finer services can be effectively provided. Also, paid distributions of video information associated with map data can be performed, and a wider range of services can be effectively realized.

### INDUSTRIAL APPLICABILITY

The car navigation system of the present invention can be used not only for map information but also for other content, such as paid distributions of serial dramas, serial novels, serial comics, and the like.

### REFERENCE SIGNS LIST

- 10, 11: central information display device
- 20, 21, 22: expansion device
- 30, 32: individual functional device
- 301: GPS antenna module
- 302, 307: navigation module
- 303, 308: integrated navigation module
- 500 map: division distribution system

## Claims

1. A car navigation system comprising:
an in-vehicle display device that includes a central information display device that has a display and displays a video image on the display; an individual functional device formed independently of the central information display device and has a navigation function; and an expansion device that connects the central information display device and the individual functional device; and
a map division distribution system that includes a map encrypting unit that encrypts a divided map with a map key uniquely assigned to the divided map formed by dividing a map; a decryption key generating unit that decrypts the map key with a user key uniquely assigned to a user; and a decryption key distributing unit that distributes a decryption key to the individual functional device.

2. The car navigation system according to claim 1, wherein, upon receipt of an area to be purchased from the individual functional device, the map division distribution system generates the decryption key by encrypting the map key with the user key, and distributes the generated decryption key to the individual functional device, the map key being for decrypting the divided map to be purchased.

3. The car navigation system according to claim 1, wherein, upon receipt of a starting point and a destination point from the individual functional device, the map division distribution system generates the decryption key by encrypting the map key with the user key, and distributes the generated decryption key to the individual functional device, the map key being for decrypting the divided map containing a route from the starting point to the destination point.

4. The car navigation system according to claim 1, wherein, when the individual functional device moves out of an area displayed on a divided map that has been purchased, the map division distribution system generates the decryption key by encrypting the map key with the user key, and distributes the generated decryption key to the individual functional device, the map key being for decrypting the divided map containing a route the individual functional device is to enter next.

5. The car navigation system according to claim 1, wherein the map division distribution system further includes:
a divided file generating unit that generates the divided map for each division unit of a different level;
a protection necessity determination generating unit that determines whether protection by encryption is necessary for each divided map, and stores a determination result together with the divided map; and
a map encrypting unit that selectively performs encryption, depending on whether protection by encryption is necessary.

6. The car navigation system according to claim 1, wherein
the map division distribution system includes a map file that stores video data associated with a location of map data,
the map encrypting unit encrypts the video data and the divided map,
the in-vehicle display device decrypts the encrypted divided map, and
a video information notifying indication that notifies that there is video information at a location associated with the video data is displayed on the display, to display a map.

7. The car navigation system according to claim 6, wherein the in-vehicle display device has a purchase button displayed together with the video information notifying indication, the purchase button being for indicating that the video data is to be purchased.

8. An individual functional device that is used in a car navigation system that includes:
an in-vehicle display device that includes a central information display device that has a display and displays a video image on the display; the individual functional device that is formed independently of the central information display device and has a navigation function; and an expansion device that connects the central information display device and the individual functional device; and
a map division distribution system that includes a map encrypting unit that encrypts a divided map with a map key uniquely assigned to the divided map formed by dividing a map; a decryption key generating unit that decrypts the map key with a user key uniquely assigned to a user; and a decryption key distributing unit that distributes a decryption key to the individual functional device.
